# EUROPEAN PATENT APPLICATION

(11) **EP 1 552 744 A1**
(43) Date of publication of application: **13.07.2005**
(21) Application number: 03740500.8
(22) Date of filing: 08.07.2003
(51) Int. Cl.: A01N 33/14

(54) **BIOCIDE THAT IS INTENDED TO ELIMINATE LEGIONELLA PNEUMOPHILA AND APPLICATION METHOD THEREOF**

(30) Priority: 09.07.2002 ES 200201601
(71) Applicant: REGINA MANAGEMENT, S.L., 08240 Manresa (ES)
(72) Inventor: COLOM FURN , Francisco, E-08093 Collbató (ES)
(74) Representative: Richebourg, Michel François
(86) International application number: PCT/ES2003/000342
(87) International publication number: WO 2004/004457

(57) **Abstract**

The biocide is composed of an extemporaneous solution of sodium 4- toluene sulphonchloramide, distilled water and excipients; the amount of sodium 4-toluene sulphonchloramide ranging between 10 and 300 grams per litre of distilled water and the amount of excipients ranging between 5 and 30 millilitres also per litre of distilled water. The method of applying the biocide contemplates the dissolution of an amount of biocide ranging between 0.05 litres and 1 litre for every 10 litres of water to be treated, depending on the amount and quality of the contamination existing in the water to be treated, as well as on its temperature and its pH.

## Description

### THE OBJECT OF THE INVENTION

This invention refers to a biocide for eliminating Legionella pneumophila and to its method of application, particularly in cooling and humidification towers and air conditioning systems, in the trays of outdoor air conditioning devices, as well as in water pipes of hospitals, office buildings, hotels, company shower facilities, old buildings, as well as ornamental fountains, sprinkling systems, etc., and other industrial water facilities susceptible to contamination by Legionella pneumophila.

### BACKGROUND OF THE INVENTION

As is known, the cooling towers used in air conditioning installations and other previously mentioned water installations are often contaminated by Legionella pneumophila. These installations present a potential risk of becoming contaminating foci for people.

Various products and procedures are currently used to eliminate Legionella in these installations. In addition to presenting limited efficacy in some cases, they pose other additional problems of either toxicity or costs.

In some cases, the elimination of Legionella in this type of industrial waters is achieved with a maximum quantity of bleach, which, as already mentioned, poses serious problems of toxicity and risk of burns for the people performing the treatment as well as for others that may be nearby or that may accidentally come in contact with the treated water.

In other cases, to eliminate Legionella, the contaminated water is subjected to successive heatings, which entails a very high energy cost and renders this method practically inapplicable in certain installations, particularly in those in which the water to be treated has a cooling function.

### DESCRIPTION OF THE INVENTION

To solve the problems mentioned above, the biocide, the object of the invention, has been conceived as well as the method for applying it, which, after a very short contact time, eliminates Legionella pneumophila bacteria without the problems of toxicity or of high energy costs involved in the use of the biocide and methods mentioned above.

According to the invention, the biocide, object of this invention, is composed of an extemporaneous solution of sodium 4-toluene sulphonchloramide, distilled water and excipients; the amount of sodium 4-toluene sulphonchloramide ranging between 10 and 300 grams per litre of distilled water and the amount of excipients ranging between 5 and 30 millilitres also per litre of distilled water.

To achieve maximum efficacy of this biocide in the treatment of waters contaminated with Legionella pneumophila according to the invention, it has been foreseen that its method of application be by means of the dissolution of an amount of biocide between 0.05 litres and 1 litre for every 10 litres of water to be treated. The amount of biocide to use, within the values mentioned, will depend in each case on the contamination existing in the water to be treated, as well as on its temperature and its pH.

This application eliminates Legionella in contaminated water in a contact time of one hour without the use of the biocide posing problems of toxicity for the personnel involved in its application nor for other people nearby.

### PREFERRED DEVELOPMENT OF THE INVENTION.

In an example of preferred development, a total 100 litres of biocide product contains 10,000 grams of sodium 4-toluene sulphonchloramide and 1,000 millilitres of excipients, with the remaining amount being distilled water.

Having sufficiently described the nature of the invention as well as an example of preferred development, it goes on record to the appropriate effects that the modifications deemed appropriate may be introduced into it as long as they do not alter the essential characteristics of the invention that is claimed next.

## Claims

1. Biocide for eliminating Legionella pneumophila; **characterized by** being composed of an extemporaneous solution of sodium 4-toluene sulphonchloramide, distilled water and excipients; the amount of sodium 4-toluene sulphonchloramide ranging between 10 and 300 grams per litre of distilled water and the amount of excipients ranging between 5 and 30 millilitres also per litre of distilled water.

2. Method of application of the biocide of the preceding claim, **characterised by** the fact that it contemplates the dissolution of an amount of biocide ranging between 0.05 litres and 1 litre for every 10 litres of water to be treated, depending on the amount and quality of the contamination existing in the water to be treated, as well as on its temperature and its pH.
